# EUROPEAN PATENT APPLICATION

(11) **EP 4 760 602 A1**
(43) Date of publication of application: **17.06.2026**
(21) Application number: 24315571.0
(22) Date of filing: 12.12.2024
(51) Int. Cl.: G06N 3/098

(54) **FEDERATED LEARNING SYSTEM**

(71) Applicant: BULL SAS, 78340 Les Clayes-Sous-Bois (FR)
(72) Inventor: Vera Diaz, Juan Manuel, 28802 Madrid (ES); Rojas Delgado, Jairo, 28037 Madrid (ES); García, Joaquín, 28005 Madrid (ES)
(74) Representative: Argyma

(57) **Abstract**

The invention relates to a federated learning system (1) comprising client devices (10) and a server (20), wherein each client device (10) comprises a training unit configured to train a machine learning model received from the at least one server (20) on a loaded local dataset during an iteration to generate trained model weights and a managing unit configured to control the training unit to train the received model for a predetermined number of iterations, each server (20) comprises a managing unit configured to identify each client device (10), to determine the number of training iterations realized by all client devices (10) and to send a machine learning model to each client device (10), and an aggregator configured to aggregate the training model weights generated after a predetermined number of iterations of all the client devices (10) to generate an aggregated model.

## Description

### [Field of the invention)

The invention relates to the field of machine learning and, more particularly, to a system and a method for federated learning.

### [Background of the invention]

Federated learning, also known as collaborative learning, is a machine learning technique focusing on settings in which multiple entities, often referred to as clients, collaboratively train a model while ensuring that their data remains decentralized. This stands in contrast to centralized machine learning settings in which data is centrally stored.

One of the main defining characteristics of federated learning is data heterogeneity. Due to the decentralized nature of the clients' data, there is no guarantee that data samples held by each client are independently and identically distributed (i.i.d.).

Federated learning is generally concerned with and motivated by issues such as data privacy, data minimization, and data access rights. Its applications involve a variety of research areas including defense, telecommunications, the Internet of Things, and pharmaceuticals.

Federated learning aims at training a machine learning algorithm, for instance deep neural networks, on multiple local datasets contained in local nodes without explicitly exchanging data samples. The general principle consists in training local models on local data samples and exchanging parameters (e.g. the weights and biases of a deep neural network) between these local nodes and a central server at some frequency to generate a model shared by all nodes.

The main difference between federated learning and distributed learning lies in the assumptions made on the properties of the datasets used for training, as distributed learning originally aims at parallelizing computing power where federated learning originally aims at training on heterogeneous datasets. While distributed learning also aims at training a single model on multiple hosts, a common underlying assumption is that the datasets used in the different hosts are independent and identically distributed (i.i.d.) and roughly have the same size. None of these hypotheses are made for federated learning; instead, the datasets are typically heterogeneous, and their sizes may span several orders of magnitude. Moreover, the clients involved in federated learning may be unreliable as they are subject to more failures or drop out since they commonly rely on less powerful communication media (i.e., Wi-Fi) and battery-powered systems (i.e., smartphones and loT devices) compared to distributed learning where nodes are typically datacenters that have powerful computational capabilities and are connected to one another with fast networks.

Some existing federated learning solutions do not support on-device training or show degraded performances as the number of clients increases, resulting in poor scalability, or do not support clients with heterogeneous data sizes, or are relatively rigid, not allowing an easy and quick implementation of custom solutions. Therefore, developers need to introduce deep modifications to the source code to provide custom applications. Both the learning curve and hard code adaptation make these solutions significatively time consuming.

Furthermore, fostering security in the communications between the different elements of a federated learning system is also a desirable feature in any design or architecture.

It is therefore an object of the present invention to provide a framework to remedy at least partly these drawbacks.

### [Summary of the invention]

To this end, the present invention relates to a federated learning system that follows the pipes and filters paradigm, proposing a set of functional units that represent the different actors involved in the federated learning process such as a plurality of client devices and at least one server.

More particularly, the invention relates to a federated learning system comprising a plurality of client devices and at least one server, wherein:
- each client device is identified by a unique identifier and comprises a communication unit configured to communicate with the at least one server to receive a machine learning model, a training unit configured to train a machine learning model received from the at least one server on a loaded local dataset during an iteration to generate trained model weights, a loader configured to load a local dataset for processing by the training unit, a managing unit configured to manage the connection to the at least one server and to control the loader and the training unit to train the received model for a predetermined number of iterations and the communication unit to send at the end of each training iteration generated trained model weights along with the identifier to the at least one server,
- each server comprises a communication unit configured to communicate with each client device of said plurality of client devices to send a machine learning model and receive trained model weights, a managing unit configured to identify each client device based on a received identifier, to determine the number of completed training iterations by all the identified clients devices and to send a machine learning model to each client device, and an aggregator configured to aggregate the training model weights generated after each iteration of a predetermined number of iterations of all the client devices to generate a aggregated model.

An iteration corresponds to a step where all the client devices have completed their training on the same received machine learning model.

The invention allows the creation of a federated learning framework, for example based on the Python programming language that enables collaborative training of artificial intelligence models using proprietary data stored in different locations without the need for data sharing, thus ensuring and maintaining data privacy. A key advantage of the invention is its architecture based on the pipes and filters paradigm. This means that each function is encapsulated in small processing units, called pods, making it modular and easier to manage, and ultimately enabling distributed parallel computing. These small, self-contained units allow for easier updates, maintenance and scalability, as individual components can be changed without affecting the entire system.

The framework according to the invention differs from the prior art in its flexible coupling of components, ease of parallelism, logic abstraction and reusability. The flexible coupling of one or more servers with client devices allows different client devices to be implemented and combined in different ways without making assumptions about their use, ensuring smooth integration and enhanced compatibility across different technology environments. The framework is conducive to parallel processing, allowing each component or pod to be deployed on different infrastructures with minimal effort, improving efficiency and performance. Logic abstraction enables pods to be treated as black boxes, allowing framework users to use them without needing to understand the underlying logic, simplifying the user experience. In addition, reusability is a key feature, as each pod can be invoked and used as many times as required, significantly reducing development time and cost. While some frameworks offer some of these features, the framework according to the invention uniquely integrates all four, making it a practical and efficient choice for businesses looking to effectively leverage technology.

This invention focuses on providing developers with distributed and collaborative capabilities to develop and deploy federated learning applications. The invention is based on the filters and pipes programming paradigm, where an event-driven approach is adopted, and functionalities are divided into atomised components (hereafter referred to as pods). The key features offered by this invention are: scalability, since the same structure of pods defining a federated learning actor (i.e. the federated learning client) can be instantiated as many times as needed; reusability, since the same pod can be used in different federated learning actors; parallelism, since the event-driven execution of pods can be performed in parallel; and distributed deployment, since each pod can be deployed on a different machine.

In addition, the framework according to the invention is based on event-driven programming, where signals are propagated through the pipeline of pods. This approach ensures efficient processing as actions are triggered in response to specific events, reducing unnecessary computational load. The framework is also highly customizable to meet the needs of specific use cases, allowing users to easily tailor the system to their requirements. This combination of modularity, efficient processing and customization makes the federated learning framework according to the invention a practical and effective solution for safe, collaborative Al model training.

In a preferred embodiment, the communication unit and loader are respectively identical between the at least one server and each client device.

Advantageously, the communication unit is configured to manage the communication interfaces, supporting communication protocols such as HTTP and Kafka, ensuring that the server exchanges data with the analogue client pod correctly, and vice-versa.

In a preferred embodiment, each client and each server comprise a coder-decoder configured to encode and decode data exchanged with the other entities of the system.

Preferably, the coder-decoder is a binary coder-decoder to ensure efficient data transmission.

Preferably, the server further comprises a loader configured to load an evaluation dataset, and an evaluation unit configured to evaluate the aggregated model performance on a loaded evaluation dataset received from the loader, the managing unit being configured to receive or store an evaluation dataset, to control the loader to load said evaluation dataset into the evaluation unit and to control the evaluation unit to evaluate an aggregated model generated by the aggregator. The evaluation unit allows to monitor how the performance of the aggregated model changes over time when evaluating a dataset different from the ones used within the clients. This allows to make unbiased performance assessments, check generalization and, make fair comparisons across federated iterations. Such an evaluation may help the user of the client device to monitor how the model training progresses across training rounds.

Advantageously, local and server datasets may be tabular data (.csv), images (.jpg and .png), or any other data types, as the user is able to provide its own loader function.

According to an embodiment of the invention, the system comprises a unique server implemented by a centralized entity, for example a single physical entity.

According to another embodiment of the invention, client devices are grouped into a plurality of clusters, each cluster having a local server as defined here above, the system further comprising a root server, each local server being configured to send its aggregated model to said root server, said root server being configured to receive an aggregated model from each local server and compute a global model using the received aggregated models. Once the root server has computed a global model, a "global iteration" has been completed (that is, interchange of information between clusters). Then, this process is repeated during a predetermined number of "global iterations".

According to another embodiment of the invention, the system comprises a plurality of agents, each agent comprising one client device of the plurality of client devices and one server.

The invention also relates to a federated learning server for communicating with a plurality of client devices in a system as described here above, each client device being configured to train a model and generate trained model weights, said server comprising a communication unit, an aggregator and a managing unit, wherein:
- said communication unit is configured to communicate with each client device of said plurality of client devices to send a machine learning model and receive trained model weights,
- said aggregator is configured to aggregate the training model weights generated after each iteration of a predetermined number of iterations by all the client devices to generate an aggregated model,
- said managing unit is configured to identify each client device based on a received identifier, to determine the number of training iterations realized by all the identified client devices and to send a machine learning model to each client device via the communication unit.

Preferably, the server further comprises a coder-decoder configured to encode and decode data exchanged with said client devices via the communication unit.

Preferably, the coder-decoder is a binary coder-decoder to increase the efficiency of the coding and decoding.

Preferably, the server further comprises a loader configured to load an evaluation dataset, and an evaluation unit configured to evaluate the aggregated model performance on a loaded evaluation dataset received from the loader, the managing unit being configured to receive or store an evaluation dataset, to control the loader to load said evaluation dataset into the evaluation unit and to control the evaluation unit to evaluate an aggregated model generated by the aggregator.

In an embodiment, the server is configured to, when the number of iterations has reached the predefined training round number, stop.

In an embodiment, the server is further configured to send the aggregated model to a root server on a communication link.

The invention also relates to a federated learning client device for a system as described here above, said client device being identified by a unique identifier and comprising a communication unit, a training unit, a loader, and a managing unit, wherein:
- the communication unit is configured to communicate with a server of said system to receive a machine learning model,
- the training unit is configured to train a machine learning model received from the at least one server on a loaded local dataset during an iteration to generate trained model weights,
- the loader is configured to load a local dataset for processing by the training unit,
- the managing unit is configured to manage the connection to the at least one server and to control the loader and the training unit to train the received model for a predetermined number of iterations and the communication unit to send at the end of each training iteration generated trained model weights along with the identifier to the at least one server.

Preferably, the client device is configured to train the received machine learning model during a predetermined number of epochs at each iteration.

Preferably, the client device further comprising a coder-decoder configured to encode and decode data exchanged with the server.

Still preferably, the coder-decoder is a binary coder-decoder to enhance the efficiency of the communications.

The invention also relates to an iterative method of federated learning for generating an aggregated model to be used in an application, said method comprising, for each iteration, the steps of:
- receiving, by each client device, a machine learning model sent by the server,
- training, by each client device, the machine learning model on its local datasets to generate trained model weights, (no data being shared with the server or other clients)
- sending, by each client device, its identifier and trained model weights to the server,
- receiving, by the server, from each client device, the sent identifier and trained model weights,
- determining, by the server, the total number of iterations of training performed by all the client devices,
- determining, by the server, an aggregated model by aggregating the received trained model weights, for example by calculating the average of the weights,
- if the number of iterations has not reached a predefined training round number, then send the aggregated model to each client device to start a new iteration,
- if the number of iterations has reached the predefined training round, then stop the iterations.

Preferably, the server further comprising a loader configured to load an evaluation dataset, and an evaluation unit configured to evaluate the aggregated model performance on a loaded evaluation dataset received from the loader, and the managing unit being configured to receive or store an evaluation dataset, to control the loader to load said evaluation dataset into the evaluation unit and to control the evaluation unit to evaluate an aggregated model generated by the aggregator, the method comprises a step of loading an evaluation dataset into the evaluation unit, and a step of evaluating by the server the aggregated model performance on the loaded evaluation dataset received from the loader to monitor the evolution of the performance of said model between training iterations.

Advantageously, the method comprises, prior the first iteration, the preliminary steps of:
- subscribing, for each device, to the server,
- loading, by an operator, an initial machine learning model onto the server prior to sending, by the server, said loaded initial machine learning model to each subscribed client device.

This initial model can be a pretrained model or an initial version prepared for the federated learning process.

Preferably, the step of sending the initial machine learning model to each subscribed client device is performed only when a predefined minimum number of client devices have subscribed to the server.

Advantageously, the method further comprises a step of sending the last determined aggregated model obtained when the number of iterations has reached the predefined training round number to an external application for its further usage (storage, deployment, etc.).

In an embodiment, the client devices being grouped into a plurality of clusters, each cluster having a local server as presented before and the system further comprising a root server, the method comprises a step, for each local server, after the number of iterations has reached the predefined training round number, of sending its aggregated model to said root server, a step, for the root server, of receiving an aggregated model from each local server and a step, by the root server, of computing an ultimate model using the received aggregated models.

The invention also relates to a computer program comprising instructions which, when the program is executed by a computer, cause the computer to carry out the steps of the method as presented before.

### [Brief description of the drawings]

These and other features, aspects, and advantages of the present invention are better understood with regard to the following Detailed Description of the Preferred Embodiments, appended Claims, and accompanying Figures, where:
Figure 1 schematically illustrates an example of the system according to the invention.
Figure 2 schematically illustrates an embodiment of the system of figure 1.
Figure 3 schematically illustrates another embodiment of the system according to the invention where client devices are grouped in clusters.
Figure 4 schematically illustrates another embodiment of the system according to the invention where each client device implements a server.
Figure 5 illustrates an embodiment of the method according to the invention.

### [Detailed description]

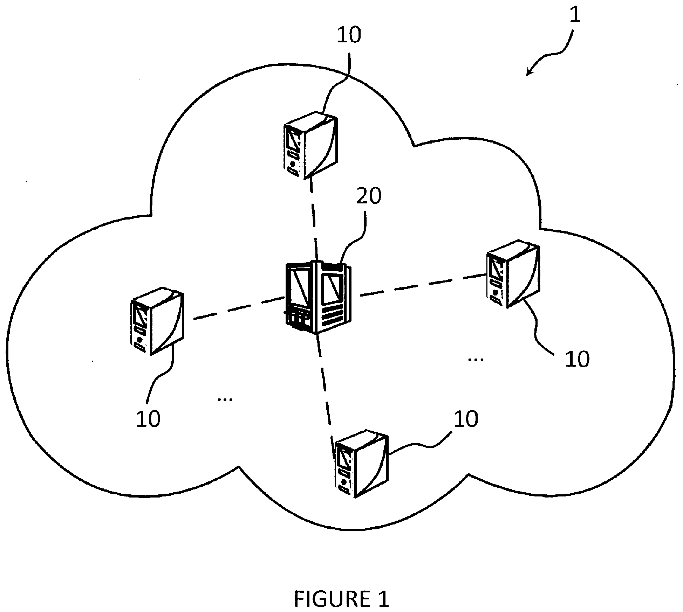

Figure 1 shows a generic example of federated learning system 1 according to the invention.

The system 1 comprises a plurality of client devices 10 and at least one server 20.

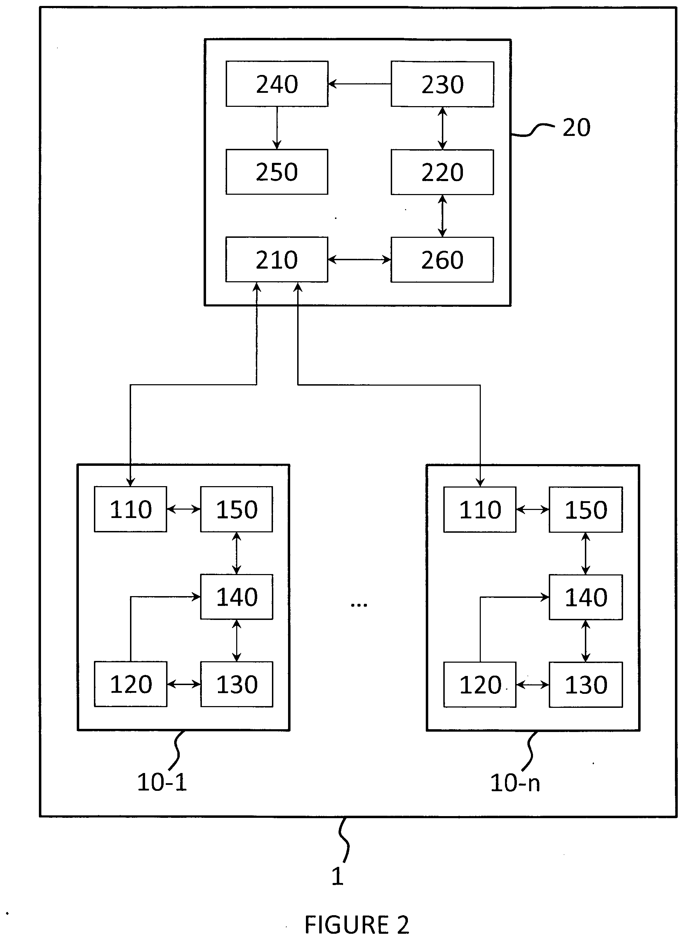

In reference to Figure 2, each client device 10 is identified by a unique identifier and comprises a communication unit 110, a training unit 120, a loader 130, and a managing unit 140.

The communication unit 110 is configured to communicate with the at least one server 20 to send trained model weights and receive a machine learning model, which can be an initial machine learning model or an aggregated machine learning model.

The training unit 120 is configured to train a machine learning model received from the at least one server 20 on a loaded local dataset during an iteration to generate trained model weights. During an iteration, each training unit 120 trains the received machine learning model during a predetermined number of epochs, in a known manner of training a machine learning model.

The loader 130 is configured to load a local dataset for processing by the training unit.

The managing unit 140 is configured to manage the connection to the at least one server 20 and to control the loader 130 and the training unit 120 to train the received machine learning model on a client dataset and the communication unit 110 to send at the end of each training iteration generated trained model weights TRW along with the identifier to the at least one server 20.

Advantageously, each client device 10 comprises a coder-decoder 150, preferably a binary coder-decoder 150, configured to encode and decode data exchanged with the at least one server 20 while ensuring efficient data transmission.

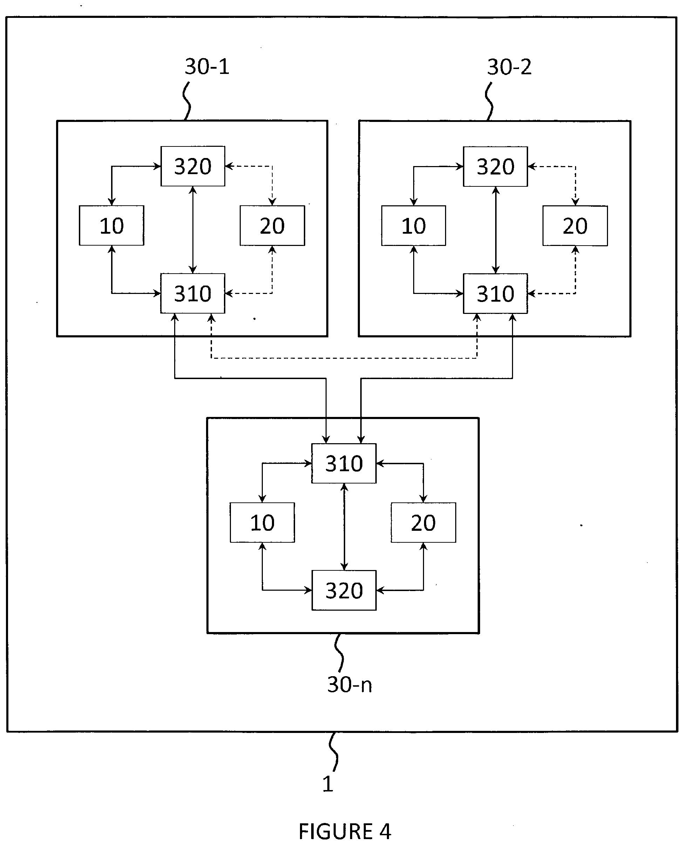

In one embodiment, each client device 10 is associated with a server 20 in an entity called "agent" 30 as illustrated in Figure 4.

The server 20 comprises a communication unit 210, a managing unit 220, an aggregator 230, a loader 240 and an evaluation unit 250.

The communication unit 210 is configured to communicate with each client device 10 to send a machine learning model MLM and receive trained model weights.

The managing unit 220 is configured to identify each client device 10 based on an identifier received from said client device 10, to determine the number of training iterations realized by all the client devices 10-1, ...,10-n, and to send machine learning models such as an initial model MLM and an aggregated model AM to each client device 10.

The aggregator 230 is configured to aggregate the training model weights generated after each iteration of all the client devices to generate an aggregated model. The link between the aggregator and the loader ensures that the new aggregated machine learning model is ready before reading the server dataset.

The loader 240 is configured to load a server dataset to be used by the evaluation unit 250.

The evaluation unit 250 is configured to evaluate the aggregated model performance on said loaded server dataset to allow assessing the evolution of the aggregated model along the iterations.

Advantageously, the server 20 comprises a coder-decoder 260, preferably a binary coder-decoder 260, configured to encode and decode data exchanged with each client device 10 while ensuring efficient data transmission.

Preferably, the communication unit 110, the loader 130 and the coder-decoder 150 of each client device 10 and the communication unit 210, the loader 240 and the coder-decoder 260 of the server 20 are identical.

Preferably, the training unit 120 is identical to the evaluation unit 250, although in the first one only the training capabilities are used, while in the second one only the evaluating capabilities are used.

Preferably, the communication unit 110 manages both HTTP and Kafka-based communication protocols, ensuring that the server 20 exchanges data with each client device 10 correctly, and vice-versa.

Datasets loaded by the loader 130, 240 may be for example tabular data (CSV), images (.jpg and .png), or data from other nature.

In a first embodiment, like in the example of Figure 1, the system 1 comprises a unique server 20 implemented by a centralized device.

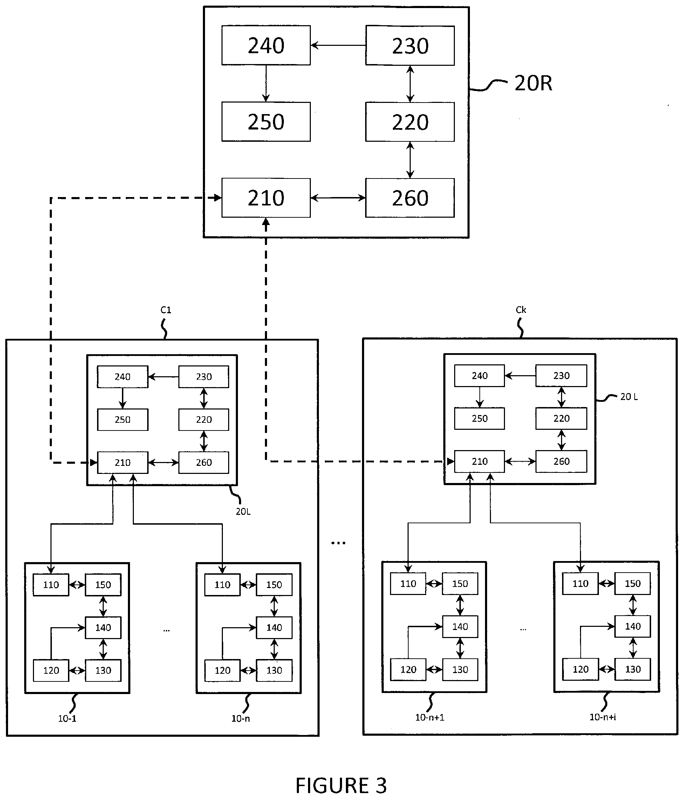

In a second embodiment of the system 1, as shown on Figure 3, client devices 10 are grouped into a plurality of clusters C1, C2, ..., Ck, each cluster having a local server 20L as defined here before. In this embodiment, the system 1 further comprises a root server 20R, each local server 20L being configured to send its aggregated model AM to said root server 20R. The root server 20R is configured to receive an aggregated model AM from each local server 20L and compute an ultimate model using the received aggregated models AM.

In a third embodiment of the system 1, as shown on Figure 4, each client 10 is coupled to a server 20 as defined here above in an agent 30 entity, said server 20 being operated by a different agent 30 at each iteration.

Each agent 30 further comprises a pod communicator 310, which is identical to and replace the communication unit 110 of the client device 10 and to the communication unit 210 of the server 20. In other words, the communication unit 110 of the client device 10 and the communication unit 210 of the server 20 are implemented on the same instance (the pod communicator 310). The other pods with similar functionalities may be instantiated only once within each agent 30 to save resources (the coder/decoder pod 150/260, the pod loader 130/240, the trainer unit 120 / evaluator unit 250).

Each agent 30 also further comprises a pod rotator 320, which is configured to establish which one of the agents 30 is in charge of operating its server 20 to perform the aggregation of the trained model weights TMW from all client devices 10 at each iteration, a different agent 30 being selected at each iteration. The selection is made using the pod rotators 320 before each iteration.

In the example of Figure 4, all the agents 30-1,...,30-n act as clients, that is why the interactions with the server 20 within these agents are depicted with dashed lines, while 30-n acts also as the server 20 for the current iteration, that is why the interactions with the server 20 within that agent 30-n are depicted with solid lines. Similarly, the interaction between 30-1 and 30-2 through the pod communicator 310 is not active in this iteration, as both agents 30-1, 30-2 (with only client role) do not need to communicate during this round.

### Examples of operation

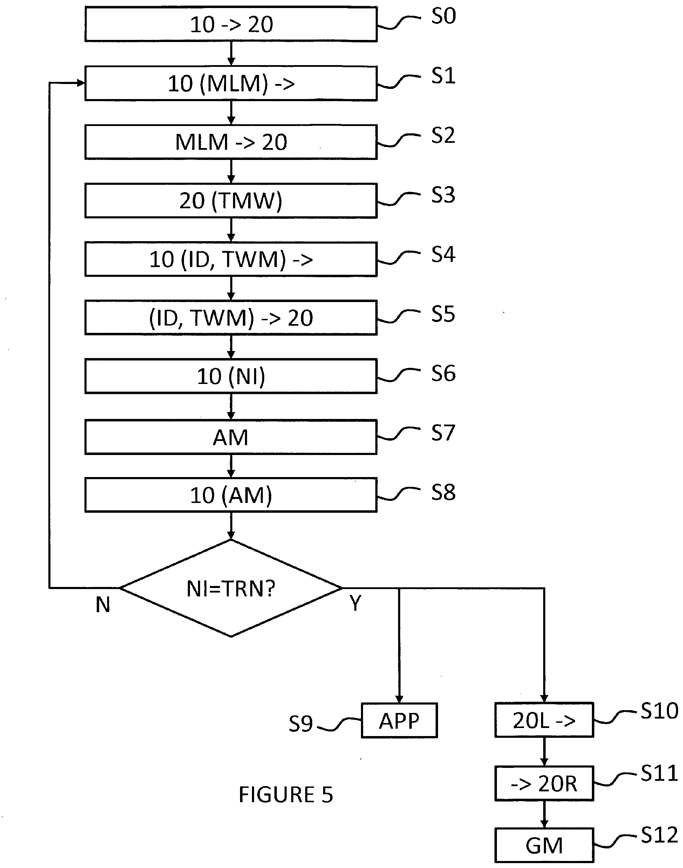

The generic iterative method of federated learning for generating an aggregated model to be used in an application will now first be described in reference to Figure 5.

As a prerequisite, an initial machine learning model is first received and optionally stored into the server memory, for example by an operator. This initial model can be a pretrained model or an initial version prepared for the federated learning process.

Preferably, in a preliminary step S0, each client device 10 can subscribe to the server 20 to train a machine learning model MLM provided by said server 20.

In a step S1, the server 20 sends the received/stored machine learning model MLM to each subscribed client device 20, preferably when a predefined minimum number of client devices 10 have subscribed to the server 20.

Each subscribed client device receives the sent machine learning model MLM in a step S2 and trains the received machine learning model MLM on an own local dataset to generate trained model weights TMW in a step S3. Each client device 10 trains the machine learning model MLM on its own data, stored on said client device 10, meaning that no data are shared with the server 20 or other clients 10. The datasets of different client devices 10 are usually different as each client device 10 generates its own data.

Once a client device 10 has trained the machine learning model MLM, said client device 10 sends its unique identifier ID and its trained model weights TMW to the server 20 in a step S4, which are received by the server 20 in a step S5.

The server 20 determines in a step S6 the total number of iterations NI of training performed by each client device 10, by incrementing a counter and generate in a step S7 an aggregated model AM using the received trained model weights TMW from each client device 20. For example, the server 20 can calculate the average of the trained model weights TMW of all client devices 10. The implemented method computes the weighted average of the trained weights according to the data size of the clients, so higher importance (weights) is given to clients with larger datasets, as their updates are considered more statistically significant.

Once the aggregated model has been generated, the managing unit 220 of the server 20 control the loader 240 to load a received or stored server data into the evaluation unit 250 to evaluate in a step S8 the generated aggregated model AM over said loaded server dataset to monitor the evolution of the performance of said model between training iterations. If the evaluation does not comply with predefined criteria, the total number of iterations can be increased during iterations to continue longer with the process until complying with said predefined criteria.

If the number of iterations NI has not reached a predefined training round number TRN, then the process restarts from step S1 using the last generated aggregated model AM.

If the number of iterations NI has reached the predefined training round number, then stop the iterations.

In this case, the last generated aggregated model can be sent directly for integration into an application and run by the application APP in a step S9.

When client devices 10 are grouped into a plurality of clusters C1, C2, ..., Ck like described in the second embodiment, each local server 20L sends its last generated aggregated model to the root server 20R in a step S10. When the root server 20R has received aggregated models AM from each local server 20L in a step S11, the root server 20R computes a global model GM using the received aggregated models AM, by aggregating the aggregated models AM, in a step S12. Once the root server 20R has computed a global model GM, a "global iteration" has been completed (that is, interchange of information between clusters C1, C2, ..., Ck). Then, the root server 20R sends the global model GM back to the local servers 20L, and the process stars from S1. This process is repeated during a predetermined number of "global iterations" to obtain a global model GM that can be further send to an application APP for use or storage.

Integration of the aggregated model or the global model GM into a third-party application for storage, model versioning, and deployment can be done. A specific unit or pod can be used to manage the connections with the application to perform these actions, rendering thus the integration in the application straightforward.

The Specification, which includes the Summary of Invention, Brief Description of the Drawings and the Detailed Description of the Preferred Embodiments, and the appended Claims refer to particular features (including process or method steps) of the invention. Those of skill in the art understand that the invention includes all possible combinations and uses of particular features described in the Specification. Those of skill in the art understand that the invention is not limited to or by the description of embodiments given in the Specification but defined by the claims.

## Claims

1. A federated learning system (1) comprising a plurality of client devices (10) and at least one server (20), wherein:
- each client device (10) is identified by a unique identifier (ID) and comprises a communication unit (110) configured to communicate with the at least one server (20) to receive a machine learning model (MLM, AM), a training unit (120) configured to train a machine learning model (MLM, AM) received from the at least one server (20) on a loaded local dataset during an iteration to generate trained model weights (TMW), a loader (130) configured to load a local dataset for processing by the training unit (120), a managing unit (140) configured to manage the connection to the at least one server (20) and to control the loader (130) and the training unit (120) to train the received model (MLM, AM) for a predetermined number of iterations (NI) and the communication unit (110) to send at the end of each training iteration generated trained model weights (TMW) along with the identifier (ID) to the at least one server (20),
- each server (20) comprises a communication unit (210) configured to communicate with each client device (10) of said plurality of client devices (10) to send a machine learning model (MLM, AM) and receive trained model weights (TMW), a managing unit (220) configured to identify each client device (10) based on a received identifier (ID), to determine the number of training iterations (NI) realized by the client devices (10) and to send a machine learning model (MLM, AM) to each client device (10) and an aggregator (230) configured to aggregate the training model weights (TMW) generated after a predetermined number of iterations (NI) of all the client devices (10) to generate an aggregated model (AM).

2. A system (1) according to claim 1, comprising a unique server (20) implemented by a centralized entity.

3. A system (1) according to claim 1, wherein client devices (10) are grouped into a plurality of clusters (C1, C2, ..., Ck), each cluster (C1, C2, ..., Ck) having a local server (20L) as defined in claim 1, the system (1) further comprising a root server (20R), each local server (20L) being configured to send its aggregated model (AM) to said root server (20R), said root server (20R) being configured to receive an aggregated model (AM) from each local server (20L) and compute an global model (GM) using the received aggregated models (AM).

4. A system (1) according to claim 1, wherein each client device (10) is coupled to a server (20) as defined in claim 1 in an agent (30) entity, said server (20) being operated by a different agent (30) at each iteration.

5. A federated learning server (20) for communicating with a plurality of client devices (10) in a system (1) according to any of claims 1 to 4, each client device (10) being configured to train a model (MLM, AM) and generate trained model weights (TMW), said server (20) comprising a communication unit (210), an aggregator (230), and a managing unit (220), wherein:
- said communication unit (210) is configured to communicate with each client device (10) of said plurality of client devices (10) to send a machine learning model (MLM, AM) and receive trained model weights (TMW),
- said aggregator (230) is configured to aggregate the trained model weights (TMW) generated after a predetermined number of iterations (NI) of all the client devices (10) to generate an aggregated model (AM),
- said managing unit (220) is configured to identify each client device (10) based on a received identifier (ID), to determine the number of training iterations (NI) realized by all the identified client devices (10) and to send a machine learning model (MLM, AM) to each client device (10) via the communication unit (210).

6. A server (20) according to the preceding claim, said server (20) further comprising a coder-decoder (260) configured to encode and decode data exchanged with said client devices (10) via the communication unit (210), a loader (240) configured to load an evaluation dataset, and an evaluation unit (250) configured to evaluate the aggregated model (AM) performance on a loaded evaluation dataset received from the loader (240), wherein the managing unit (220) is configured to receive or store an evaluation dataset, to control the loader (240) to load said evaluation dataset into the evaluation unit (250) and to control the evaluation unit (250) to evaluate an aggregated model (AM) generated by the aggregator (230).

7. A server (20) according to any of claims 5 or 6, said server (20) being further configured to send the aggregated model (AM) to a root server (20R) on a communication link.

8. A federated learning client device (10) for a system (1) according to any of claims 1 to 4, said client device (10) being identified by a unique identifier (ID) and comprising a communication unit (110), a training unit (120), a loader (130) and a managing unit (140), wherein:
- the communication unit (110) is configured to communicate with a server (20) of said system (1) to receive a machine learning model (MLM, AM),
- the training unit (120) is configured to train a machine learning model (MLM, AM) received from the at least one server (20) on a loaded local dataset during an iteration to generate trained model weights (TMW),
- the loader (130) is configured to load a local dataset for processing by the training unit (120),
- the managing unit (140) is configured to manage the connection to the at least one server (20) and to control the loader (130) and the training unit (120) to train the received model (MLM, AM) for a predetermined number of iterations (NI) and the communication unit (110) to send at the end of each training iteration generated trained model weights (TMW) along with the identifier (ID) to the at least one server (20).

9. A client device (10) according to the preceding claim, said client device (10) further comprising a coder-decoder (150) configured to encode and decode data exchanged with the server (20).

10. A client device (10) according to any of claims 8 or 9, said client device (10) being configured to train the machine learning model (MLM, AM) received from the at least one server (20) during a predetermined number of epochs before sending the trained model weights (TMW) generated at the last epoch to said server (20).

11. An iterative method of federated learning for generating an aggregated model (AM) to be used in an application (APP), said method comprising, for each iteration, the steps of:
- receiving (S2), by each client device (10), a machine learning model (MLM, AM) sent by the server (20),
- training (S3), by each client device (10), the machine learning model (MLM, AM) on its local datasets to generate trained model weights (TMW),
- sending (S4), by each client device (10), its identifier (ID) and trained model weights (TMW) to the server (20),
- receiving (S5), by the server (20), from each client device (10), the sent identifier (ID) and trained model weights (TMW),
- determining, by the server (20), the total number of iterations (NI) of training performed by all the client devices (10),
- determining, by the server (20), an aggregated model (AM) using the received trained model weights (TMW),
- evaluating, by the server (20), the determined aggregated model (AM) over a predetermined validation dataset to monitor the evolution of the performance of said model (AM) between training iterations,
- if the number of iterations (NI) has not reached a predefined training round number (TRN), then send the evaluated aggregated model (AM) to each client device (10) to start a new iteration,
- if the number of iterations (NI) has reached the predefined training round number (TRN), then stop the iterations,

12. The method according to the preceding claim, comprising, prior the first iteration, the preliminary steps of:
- subscribing (S0), for each device (10), to the server (20),
- loading, by an operator, an initial machine learning model (MLM) onto the server (20).

13. The method according to the preceding claim, wherein the step (S1) of sending the initial machine learning model (MLM) to each subscribed client device (10) is performed only when a predefined minimum number of client devices (10) have subscribed to the server (20).

14. The method according to any of claims 11 to 13, wherein the last determined aggregated model (AM) obtained when the number of iterations (NI) has reached the predefined training round number (TRN) is (S9) sent to an application (APP) and run by said application (APP) or wherein, the client devices (10) being grouped into a plurality of clusters (C1, C2, ..., Ck), each cluster (C1, C2, ..., Ck) having a local server (20L) according to any of claims 5 to 7 and the system (1) further comprising a root server (20R), the method comprises a step (S10), for each local server (20L), after the number of iterations has reached the predefined training round number (TRN), of sending its aggregated model (AM) to said root server (20R), a step (S11), for the root server (20R), of receiving a aggregated model (AM) from each local server (20L) and a step, by the root server (20R), of computing (S12) a global model (GM) using the received aggregated models (AM).

15. A computer program comprising instructions which, when the program is executed by a computer, cause the computer to carry out the steps of the method according to any one of claims 11 to 14.
